# EUROPEAN PATENT SPECIFICATION

(11) **EP 3 088 120 B1**
(45) Date of publication and mention of the grant of the patent: **03.01.2024**
(21) Application number: 16382135.8
(22) Date of filing: 23.03.2016
(51) Int. Cl.: B23K 11/30

(54) **METHOD FOR REPLACING ELECTRODES AND CONTROL DEVICE FOR AN ELECTRIC CLAMP**
VERFAHREN ZUM ERSETZEN VON ELEKTRODEN UND STEUERUNGSVORRICHTUNG FÜR EINE ELEKTRISCHE KLEMME
PROCÉDÉ DE REMPLACEMENT D'ÉLECTRODES ET DISPOSITIF DE COMMANDE DE SERRAGE ÉLECTRIQUE

(30) Priority: 30.04.2015 ES 201530594
(43) Date of publication of application: 02.11.2016
(73) Proprietor: Seat, S.A., 08760 Martorell (ES)
(72) Inventor: Mauri Vidal, Jordi, 08760 MARTORELL (ES); Gendrau Magre, Antonio Maria, 08760 MARTORELL (ES)
(74) Representative: Elzaburu S.L.P.

(56) References cited:
- WO-A1-2015/036038
- US-A1- 2009 173 725
- US-A1- 2011 266 260

## Description

### PURPOSE OF THE INVENTION

The present patent application relates to a method for replacing electrodes in an electric clamp for welding the sheet metal of a motor vehicle, according to Claim 1, incorporating noteworthy innovations and advantages.

Additionally, the present patent application also relates to a control device for an electric clamp for welding the sheet metal of a motor vehicle, according to Claim 7, incorporating noteworthy innovations and advantages.

### BACKGROUND TO THE INVENTION

In the prior art, there are numerous known solutions for methods for replacing electrodes in an electric clamp for welding the sheet metal of a motor vehicle, as well as control devices for electric clamps.

Accordingly, as set out in document US20080237199, a method for ensuring that a spot weld electrode tip dressing operation is performed properly, taking advantage of an electrode wear compensation routine, is known in the prior art. The method uses measurements of total tip wear to calculate a difference in electrode wear between selected numbers of successive operations. This value is then used to perform a comparison with the stored average wear to conclude whether the tip dressing operation is operating properly. Said compensation method is focused on creating a good spot weld after a cutting operation, based on determining the quantity cut, compensating, calculating the difference between the cut and the average and comparing said values. The method is intended to improve welding operations, and not to optimize the service life of the weld electrodes. Furthermore, it uses statistical average values for said compensation, which does not result in a precise adjustment.

Moreover, as set out in document US20080237303, a method for determining that the electrodes of an electric resistance welder are in need of replacement is known in the prior art. It includes monitoring the rate of progressive wearing of the electrodes during successive welds. The method is used both to determine electrode wear and when they should be cut, as a function of the indentation depth of the spot welds. However, it does not provide a precise value for determining the time the electrode needs to be cut.

As set out in document ES2361687, an automated method for detecting wear in a non-consumable electrode of an arc-welding torch and replacing same with a new electrode or automatically machining said electrode if it has been eroded, is also known from the prior art. The method comprises the following steps: a) counting, during welding, the number of times the electrode in question is primed and at least one wear indication parameter, either the arc time of said electrode or the priming time to create the arc, b) comparing the value of at least one of the wear indication parameters from step a) with at least one respective predetermined reference value, c) replacing the eroded electrode with a new or newly sharpened electrode if the value of at least one of the wear indication parameters is equal to or greater than at least said respective predetermined reference value. This automated method does not however provide means for determining the wear of the electrode as a function of weld time or comparing same with a reference value.

As such, there is evidently a need both for a method for replacing electrodes and for a control device for an electric clamp for welding sheet metal of a motor vehicle that enables said electric clamp to control the service life of the electrode or copper tip simultaneously with the control exercised by the weld monitoring device, providing greater replacement precision compared to systems that only use the weld monitoring device for control purposes, which has normally been the case to date.

WO 2015/036038 A1 discloses a method for replacing electrodes in an electric clamp and forms the basis for the preamble of claim 1.

### DESCRIPTION OF THE INVENTION

According to the present invention, this matter is addressed by a method for replacing electrodes and a control device for an electric clamp for welding the sheet metal of a motor vehicle according to Claims 1 and 7.

Additional advantages of the invention can be found in the features included in the dependent claims and mentioned in the description below.

Currently, spot welding is a resistance welding method that is based on pressure and temperature, in which a portion of the parts to be welded is heated by an electrical current to temperatures close to fusion, and pressure is exerted between same. The base materials must be arranged to overlap between electrodes, which are used to sequentially apply the pressure and current corresponding to the cycle producing one or more spot welds.

The electrodes of the welding clamps have a life cycle, which is considered in practice to be a constant value determined by multiplying the number of spot welds between successive milling operations and the number of milling operations. In actual fact however, this value may not be a constant since it depends on various factors such as the wear of the milling blade (the more worn it is, the less it cuts the electrode), the state of the disc, the force of the clamp, etc. Consequently, the action of changing the electrode needs to be prompted by monitoring device of the electric clamp, given that after each time the electrode is cut or milled, the electrode is measured to determine how many tenths of millimetres have been removed. This measurement is taken to check that the distance between the sheet metal and the electrode remains constant.

Currently, a milling rate (number of spot welds completed before a milling operation is carried out) and a determined number of milling operations are programmed into the weld monitoring device of the robot that incorporates the electric clamp. This multiplication gives us the number of spot welds created with a pair of electrodes, or the service life of same (which is the same thing). This provides a constant service life of the electrodes that is independent of any other factors. In consideration of real factors, the blade that performs the milling removes less material each time it is used, even though it remains functional. This creates the problem of having to change electrodes blindly before they are actually worn out.

In practice, the rate and in particular the number of milling operations is adjusted to make optimum use of the 10 mm (5 mm for each of the two electrodes), assuming that the milling blade is new. The progressive wear of the blade of the milling machine is not taken into account, and this means that said blade removes less material from the electrode as said blade wears down. Since the number of milling operations does not adapt to the changing situation, the state of the electrodes being changed becomes gradually newer. It is therefore necessary to optimize the service life of the welding electrodes as a function of the parameters that affect longevity and not to assume that replacement of the electrodes depends on a constant value related to the number of spot welds made. For this reason, real values such as perpendicular programming of the robot, electrode-sheet metal distance, disc condition and force of the clamp etc. need to be taken into account in order to ensure all of the copper (10 mm) of the electrodes is used.

Accordingly and more specifically, the present invention relates to a method for replacing electrodes in an electric clamp for welding the sheet metal of a motor vehicle, comprising the following steps:
(i) placing at least one electrode of the electric clamp in the related seat,
(ii) welding the sheet metal of the motor vehicle a number n times,
(iii) milling the at least one electrode after the weld has been made,
also comprising the following steps:
(iv) incrementing a counter of the number of milling operations in a weld monitoring device,
(v) using the electric clamp to measure a milled dimension of the electrode,
(vi) comparing the milled dimension of the electrode with a predetermined dimension of the electrode, and
(vii) determining the variation of a dimension of the milled electrode using a variable controller of the electric clamp to replace the blade of a milling machine and to modify the position of the welding arms in relation to the sheet metal, wherein a control device is configured to carry out the steps:
(viii) replacing the at least one electrode if the milled dimension of the electrode is greater than said predetermined dimension of the electrode, or
(ix) replacing the at least one electrode if the counter of the number of milling operations is greater than the predetermined number of milling operations.

It should be noted that the milled dimension of the electrode means the absolute quantity milled from the electrode from new. Consequently, the sum of all of the lengths removed during the life of the electrode make up the milled dimension of said electrode.

Said method is used in parallel to schedule electrode replacements when determined either by the control device for the electric clamp or by the weld monitoring device. Weld monitoring device means the electronics that monitor the weld process, controlling factors such as number of repetitions, rate, etc. This generates a saving in electrodes, using all of the copper (5 mm of wear in each electrode), as well as a time saving in consideration of the number of electrode replacements required. It is noteworthy that replacing electrodes as a function of a constant value results in same being replaced before this is actually necessary. For this reason, the method set out generates a time saving since the electric clamp spends less time out of service as a result of electrode replacement.

This automates the wear/replacement process for the blade of a milling machine, resulting in an increase in the quality of the spot welds. Blades in poor condition cause numerous faulty spot welds, for example by creating sharp burrs and edges that could cut the user of the motor vehicle. Furthermore, if a blade is not cutting correctly, it hardens and contaminates the electrodes, resulting in loose spot welds, unwanted burrs after milling, machining errors, unwanted marks on spot welds, poor adjustment in adaptive control, etc.

Consequently, the present invention firstly maximizes the service life of the electrode without exceeding the point beyond which it can no longer correctly perform the intended functions, and secondly checks whether the blade or milling machine is milling correctly (worn out blades cut less or barely cut at all), thereby also checking the service life of the blade or milling machine.

According to another aspect of the invention, the electrodes are replaced by the weld monitoring device if the predetermined number of milling operations is at least 150, the value being calculated as follows: = 100 + number of milling operations that the electrodes have undergone with a new blade and with a maximum permitted wear of 10 mm. This programs a specific fixed value, redundantly with the control device for the electric clamp, to enable the weld monitoring device to monitor the service life of the blade of the milling machine.

Advantageously, in the method according to the present invention, if the milled dimension of the electrode is less than the predetermined dimension of the electrode, and/or if the counter of the number of milling operations is less than the predetermined number of milling operations, a new cycle of welds is started in step (ii). The method therefore enables the next welding cycle to continue in the absence of any condition stopping same.

In a preferred embodiment of the invention, the measurement by the electric clamp of the milled dimension of the electrode in step (v) is carried out using a variable controller of the electric clamp. Variable controller means the electronic control element that controls an actuating element of the electric clamp, such as the motor of the movable arm. As such, the measurement taken by the electric clamp is used to monitor the wear of the electrodes, and to determine the replacement of same.

More specifically, the step in which the electric clamp is used to measure a milled dimension of the electrode also includes the following steps:
- closing the electric clamp until the two electrodes touch,
- calculating a movement of at least one movable arm, and
- opening the electric clamp to the original position.

As such, according to the invention, the method includes an additional step for determining the variation of a dimension of the milled electrode using the variable controller of the electric clamp. It should be noted that, given that the electrodes wear out over time, primarily as a result of milling, which in the worst case scenario can reach 5 mm in each electrode, one of the consequences is that the welding cycle gets longer since the travel of the electrodes increases. There is an electrode geometry verification function to overcome this effect. When activated after each milling operation, the clamp closes until the electrodes touch, and then opens back to the original position. As such, the variable controller of the electric clamp detects the wear suffered by the electrodes, and the distance between same can be maintained.

Advantageously, the additional step of determining the variation of the dimension of the milled electrode includes comparing the milled dimension of the electrode with a milled dimension of the electrode previously stored in a previous weld cycle. Consequently, as mentioned, the variable controller of the electric clamp moves the related movable arm with an electric motor, and this latter has a sensor that controls the position and compares the position after milling to the position before milling in order to determine how much of the electrodes has been removed.

According to the invention, determining the value of the variation of the dimension of the electrode makes it possible to precisely modify the position of the welding arms in relation to the sheet metal to ensure that the quality of the weld is optimized at all times. Furthermore, this value is also used to check the state of the milling machine or blade: if the variation is zero, it means that it is not cutting and as such there is a defect or excessive wear in the blade or milling machine.

The present invention also relates to the control device for an electric clamp as defined in claim 7

in order to improve monitoring of the operation by the persons responsible for supervising same. At least one step of the method specifies that the screen of the display means shows information on one or more steps of the method, although the steps of the method need not necessarily be displayed sequentially.

More specifically, the display means show whether replacement of the at least one electrode is due to: a) the fact that the milled dimension of the electrode is greater than a predetermined dimension of the electrode or b) the fact that a counter of the number of milling operations is greater than a predetermined number of milling operations, which provides information on whether the electrode is actually worn out or, on the contrary, the predetermined maximum quantity has simply been reached by default.

More specifically, the display means emit a signal when a milled dimension of the electrode detected by the sensor of the electric motor of at least one movable arm is greater than a predetermined dimension of the electrode. As such, programming can be used to determine whether the robot of the electric clamp is going to replace the electrodes, either by detection by the electric clamp or by instruction from the weld monitoring device. It should be noted that when the robot replaces electrodes by instruction from the weld monitoring device, this indicates that the underlying reason is that the blade is worn out. Said signal is implemented in a human machine interface (HMI) of the installation complementing the robot of the electric clamp, indicating in a controlled manner that the blade needs to be changed.

Advantageously, the predetermined dimension of the electrode is equal to a predetermined maximum electrode wear value of 10 mm, said dimension being the sum of both 5 mm electrodes.

According to another aspect of the invention, the display means emit a signal when a milled dimension of the electrode detected by the sensor of the electric motor of at least one movable arm is greater than or equal to a target wear value of the electrodes. This alerts the operator of the welding robot to the need to replace the electrodes.

Specifically, the target wear value of the electrodes is 8.5 mm, this measurement having a margin of tolerance in relation to the possible maximum that prioritizes the quality of the spot welds.

The attached drawings show, by way of nonlimiting example, the basic elements comprising the method for placing electrodes of an electric clamp for welding the sheet metal of a motor vehicle, as well as the control device, both in accordance with the invention. Other features and advantages of said method for replacing electrodes and control device of an electric clamp for welding the sheet metal of a motor vehicle, to which the present invention relates, are set out in the description of a preferred, but non-exclusive, embodiment, which is illustrated by way of a nonlimiting example in the attached drawings, in which:

### SHORT DESCRIPTION OF THE FIGURES

Figure 1A is a perspective view of the device for an electric clamp for welding the sheet metal of a motor vehicle according to the present invention,
Figure 1B is a side view of the device for an electric clamp for welding the sheet metal of a motor vehicle according to the present invention,
Figure 2 shows the display means of the control device for an electric clamp for welding the sheet metal of a motor vehicle according to the present invention,
Figure 3 shows the display means of the control device show whether the replacement of the at least one electrode is required according to the present invention,
Figure 4 shows the display means of the control device for an electric clamp for welding the sheet metal of a motor vehicle according to the present invention,
Figure 5A is a side view of an electrode of the device for an electric clamp for welding the sheet metal of a motor vehicle according to the present invention,
Figure 5B is a perspective view of the blade of the milling machine for an electric clamp for welding the sheet metal of a motor vehicle according to the present invention.

### DESCRIPTION OF A PREFERRED EMBODIMENT

In consideration of the numbering adopted, the aforementioned figures show an example of a preferred embodiment of the invention that includes the parts and elements mentioned and described in detail below.

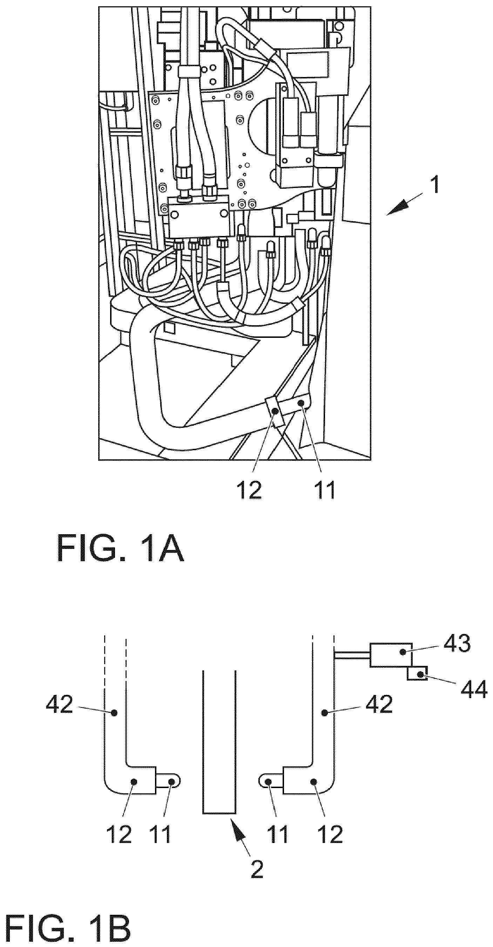

Accordingly, as shown in Figures 1A, 1B, 2 and 4, the method for replacing electrodes 11 in an electric clamp 1 for welding the sheet metal 2 of a motor vehicle comprises the following steps:
(i) placing at least one electrode 11 of the electric clamp 1 in the related seat 12,
(ii) welding the sheet metal 2 of the motor vehicle a number n times,
(iii) milling the at least one electrode 11 after the weld has been made,
also comprising the following steps:
(iv) incrementing a counter of the number of milling operations 51 in a weld monitoring device 3,
(v) using the electric clamp 1 to measure a milled dimension of the electrode 61,
(vi) comparing the milled dimension of the electrode 61 with a predetermined dimension of the electrode 62, and
(vii) determining the variation of a dimension of the milled electrode 11 using a variable controller 41 of the electric clamp 1 to replace the blade of a milling machine and to modify the position of the welding arms in relation to the sheet metal, wherein a control device is configured to carry out the steps:
(viii) replacing the at least one electrode 11 if the milled dimension of the electrode 61 is greater than said predetermined dimension of the electrode 62, or
1 (ix) replacing the at least one electrode 11 if the counter of the number of milling operations 51 is greater than the predetermined number of milling operations 52.

It should be noted that the milled dimension of the electrode 61 refers to the absolute quantity milled from the electrode from new. As such, it is not the quantity milled each time the blade is used, but the sum of the quantities cut.

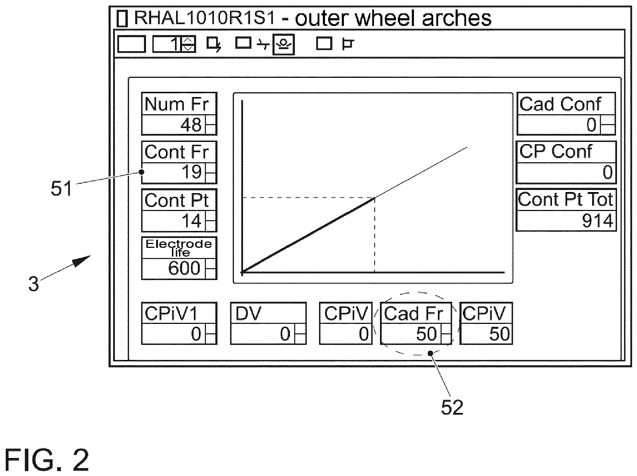

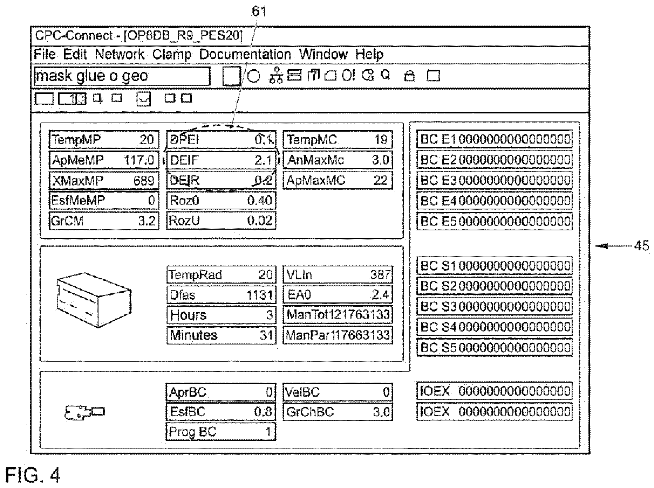

More specifically, as shown in Figures 2 and 4, the electrodes 11 are replaced if the predetermined number of milling operations 52 is at least 150. This value is standardized on the assumption that an electrode has reached the end of its life once 5 mm has been cut from the electrode. Although it is geometrically possible to remove more, this is not advisable since the exact same quantity is not cut from each electrode in the pair of electrodes mounted simultaneously in the electric clamp, and sometimes the seats 12 with the electrodes 11 are inserted twisted into the milling machine, for example at 45° (as a result of mechanical study of the clamp). Accordingly, welding using electrodes 11 with 5 mm of wear on each side is not considered to jeopardize the installation in terms of quality (copper quality) or production (outages). The value 150 is obtained by adding 100 to the number of milling operations applied to the electrodes 11 using a new milling blades 71 with a maximum permissible wear of 10 mm. Said value is considered to be a standard parameter applicable to all robots with electric clamps for welding in the plants of the business consortium.

It should be noted that Figure 2 shows a preferred exemplary embodiment in which the information shown on the screen of the display means 45 of the weld monitoring device 3 specifically includes, on two of the four information panels of same, the counter of the number of milling operations 51 and the predetermined number of milling operations 52. Furthermore, Figure 4 shows a preferred exemplary embodiment in which the information shown on the screen of the display means 45 of the weld monitoring device 3 specifically includes, on one of the four information panels of same, the milled dimension of the electrode 61.

According to another aspect of the invention, as shown in Figures 2 and 4, if the milled dimension of the electrode 61 is less than the predetermined dimension of the electrode 62, and/or if the counter of the number of milling operations 51 is less than the predetermined number of milling operations 52, a new cycle of welds is started in step (ii).

In greater detail, the measurement by the electric clamp 1 of the milled dimension of the electrode 11 in step (v) is carried out using a variable controller 41 of the electric clamp 1. Specifically, it is proposed that the service life of the electrodes 11 be managed by the electric clamp 1, since this latter exactly monitors the wear of the electrodes 11. After milling, the electric clamp 1 always takes a measurement to determine how many tenths of millimetres have been milled from the electrodes 11. This is done to keep the distance between the electrode 11 and the sheet metal 2 constant at all times, regardless of any changes in the geometry of the electrodes 11, in order to identify potential welding defects such as burrs on the electrodes 11 (to avoid marking on spot welds) or to check the cones of the seats 12 for the electrodes 11 (to avoid water leaks).

According to a preferred embodiment of the invention, as shown in Figure 1B, the step in which the electric clamp 1 measures a milled dimension of the electrode 11 also includes the following steps:
- closing the electric clamp 1 until the two electrodes 11 touch,
- calculating a movement of at least one movable arm 42, and
- opening the electric clamp 1 to the original position.

Said steps constitute the function of checking the geometry of the electrodes 11. When activated (normally after each milling operation), the clamp 1 closes until the electrodes 11 touch, and then opens back to the original position. Reaching the mechanical stop provides the electric clamp 1 with the actual size of the electrodes 11. Specifically, the measurement is taken using an encoder, or a sensor element 44, that determines the number of degrees through which the motor of the movable arm 42 rotates. Determining the ratio between the number of degrees and the equivalent in millimetres makes it possible to determine the milled dimension of the electrode 11.

According to the invention, the method for placing electrodes 11 in ar electric clamp 1 for welding the sheet metal 2 of a motor vehicle includes the step (vii) for determining the variation in a dimension of the milled electrode 11 using the variable controller 41 of the electric clamp 1.

Additionally, the additional step of determining the variation of the dimension of the milled electrode 11 includes comparing the milled dimension of the electrode 61 with a milled dimension of the electrode 61 previously stored in a previous weld cycle.

Furthermore, said electric clamp 1 includes at least one movable arm 42 actuated by an electric motor 43, which in turn includes a sensor 44 in which the sensor 44 sends information on the position of the at least one movable arm 42 of the electric clamp, including in turn display means 45 that show information on at least one step of the method for replacing electrodes 11.

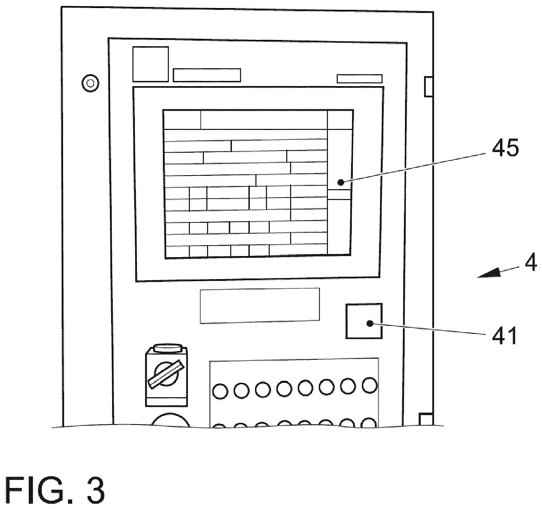

According to a preferred embodiment of the invention, as shown in Figure 3, the display means 45 show whether the replacement of the at least one electrode 11 is required due to:
a) the fact that the milled dimension of the electrode 61 is greater than the predetermined dimension of the electrode 62, or
b) the fact that a counter of the number of milling operations 51 is greater than a predetermined number of milling operations 52.

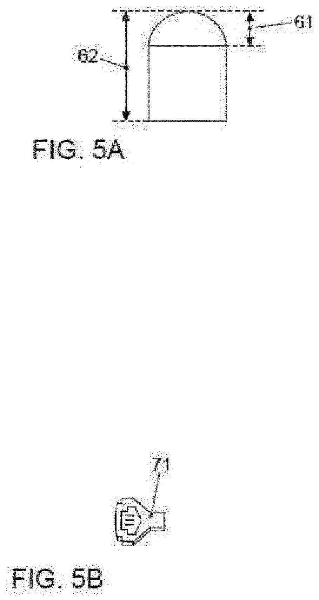

More specifically, as shown in Figures 3 and 5A, the display means 45 emit a signal when a milled dimension of the electrode 61 detected by the sensor 44 of the electric motor 43 of at least one movable arm 42 is greater than a predetermined dimension of the electrode 62. Said alarm signal is visual and/or acoustic. Furthermore, said output signal gives warning of the maximum wear of the electrodes 11, and is activated as soon as the electric clamp 1 measures more than 10 mm of wear. According to a preferred embodiment of the invention, the message in the signal from the weld monitoring device includes the words "End of life" or "Electrode worn out".

More specifically, as shown in Figure 5A, the predetermined dimension of the electrode 62 is equal to a predetermined maximum wear value of the electrode 11 of 10 mm.

According to another aspect of the invention, as shown in Figures 3 and 5A, the display means 45 emit a signal when a milled dimension of the electrode 61 detected by the sensor 44 of the electric motor 43 of at least one movable arm 42 is greater than or equal to a target wear value of the electrodes 11.

More specifically, as shown in Figure 5A, the target wear value of the electrodes 11 is 8.5 mm. The output signal provides a warning of electrode wear. It is activated if the wear measured is greater than the predetermined maximum wear value (-1.5 mm), i.e. it is activated when the clamp measures 8.5 mm of wear. It is equivalent to the pre-alarm of the weld monitoring device.

The details, forms, dimensions and other additional elements, as well as the components used to implement the method for replacing electrodes, as well as the control device for an electric clamp for welding the sheet metal of a motor vehicle may be replaced using other such appropriate elements that are technically equivalent, without thereby departing essentially from the scope of the invention as defined by the claims included after the list below.

### List of reference signs:

- 1: Electric clamp
- 11: Electrode
- 12: Seat (electrode)
- 2: Sheet metal
- 3: Weld monitoring device
- 4: Control device for an electric clamp
- 41: Variable controller (electric clamp)
- 42: Movable arm (electric clamp)
- 43: Electric motor (electric clamp)
- 44: Sensor (electric motor)

## Claims

1. Method for replacing electrodes (11) in an electric clamp (1) for welding the sheet metal (2) of a motor vehicle, comprising the following steps:
(i) placing at least one electrode (11) of the electric clamp (1) in the related seat (12),
(ii) welding the sheet metal (2) of the motor vehicle a number n times,
(iii) milling the at least one electrode (11) after the weld has been made,
(iv) incrementing a counter of the number of milling operations (51) in a weld monitoring device (3),
**characterized in that** it also includes the following steps:
(v) using the electric clamp (1) to measure a milled dimension of the electrode (61),
(vi) comparing the milled dimension of the electrode (61) with a predetermined dimension of the electrode (62), and
(vii) determining the variation of a dimension of the milled electrode (11) using a variable controller (41) of the electric clamp (1) to modify the position of the welding arms in relation to the sheet metal, wherein this value is also used to check the state of the milling machine or blade: if the variation is zero, it means that it is not cutting and as such there is a defect or excessive wear in the blade or milling machine,
wherein a control device is configured to carry out the steps:
(viii) replacing the at least one electrode (11) if the milled dimension of the electrode (61) is greater than said predetermined dimension of the electrode (62), or
(ix) replacing the at least one electrode (11) if the counter of the number of milling operations (51) is greater than the predetermined number of milling operations (52).

2. Method for replacing electrodes (11) in an electric clamp (1) for welding the sheet metal (2) of a motor vehicle according to Claim 1, **characterized in that** the electrodes (11) are replaced if the predetermined number of milling operations (52) is at least 150.

3. Method for replacing electrodes (11) in an electric clamp (1) for welding the sheet metal (2) of a motor vehicle according to Claim 1, **characterized in that** if the milled dimension of the electrode (61) is less than said predetermined dimension of the electrode (62), and/or if the counter of the number of milling operations (51) is less than the predetermined number of milling operations (52), a new cycle of welds is started in step (ii).

4. Method for replacing electrodes (11) in an electric clamp (1) for welding the sheet metal (2) of a motor vehicle according to Claim 1, **characterized in that** the measurement by the electric clamp (1) of the milled dimension of the electrode (61) in step (v) is carried out using a variable controller (41) of the electric clamp (1).

5. Method for replacing electrodes (11) in an electric clamp (1) for welding the sheet metal (2) of a motor vehicle according to Claim 1, **characterized in that** the step in which the electric clamp (1) is used to measure a milled dimension of the electrode (61) also includes:
- closing the electric clamp (1) until the two electrodes (11) touch,
- calculating a movement of at least one movable arm (42), and
- opening the electric clamp (1) to the original position.

6. Method for replacing electrodes (11) in an electric clamp (1) for welding the sheet metal (2) of a motor vehicle according to Claim 1, **characterized in that** the additional step of determining the variation of the dimension of the milled electrode (11) includes comparing the milled dimension of the electrode (61) with a milled dimension of the electrode previously stored in a previous weld cycle.

7. Control device for an electric clamp (1), operatively connected to the electric clamp (1) that comprises:
• at least one movable arm (42) actuated by an electric motor (43) for placing at least one milled electrode (11) of the electric clamp (1) in the related seat (12), wherein the at least one electrode (11) is milled by a blade of a milling machine (71) after the weld has been made,
• a sensor (44) which sends information on the position of the at least one movable arm (42) of the electric clamp (1), wherein the at least one movable arm (42) of said electric clamp (1) is actuated by the electric motor (43),
• a variable controller (41) of the electric clamp (1) which determines the variation of a dimension of the milled electrode (11) to modify the position of the welding arms in relation to the sheet metal, and wherein this value is also used to check the state of the milling machine or blade: if the variation is zero, it means that it is not cutting and as such there is a defect or excessive wear in the blade or milling machine,
• a display means (45) that displays information on at least one step of the method for replacing electrodes,
• a weld monitoring device (3) able to increment a counter of the number of milling operations (51) and to determine the replacement of the at least one electrode (11) if the counter of the number of milling operations (51) is greater than the predetermined number of milling operations (52), wherein the weld monitoring device (3) is able to, based on the measure of a milled dimension of an electrode (61) determined by the sensor (44) and comparing the milled dimension of the electrode (61) with a predetermined dimension of the electrode (62), determine the replacement of the at least one electrode (11) if the milled dimension of the electrode (61) is greater than said predetermined dimension of the electrode (62),
**characterized in that** the control device is configured to control the method for replacing electrodes according to Claim 1.

8. Control device for an electric clamp (4) that controls the method according to Claim 7, **characterized in that** the display means (45) show whether replacement of the at least one electrode (11) is due to:
a) the fact that the milled dimension of the electrode (61) is greater than a predetermined dimension of the electrode (62), or
b) the fact that a counter of the number of milling operations (51) is greater than a predetermined number of milling operations (52).

9. Control device for an electric clamp (4) that controls the method according to Claim 7, **characterized in that** the display means (45) emit a signal when a milled dimension of the electrode (61) detected by the sensor (44) of the electric motor (43) of at least one movable arm (42) is greater than a predetermined dimension of the electrode (62).

10. Control device for an electric clamp (4) that controls the method according to Claim 9, **characterized in that** the predetermined dimension of the electrode (62) is equal to a predetermined maximum wear value of the electrode (11) of 10 mm.

11. Control device for an electric clamp (4) that controls the method according to Claim 7, **characterized in that** the display means (45) emit a signal when a milled dimension of the electrode (61) detected by the sensor (44) of the electric motor (43) of at least one movable arm (42) is greater than or equal to a target wear value of the electrodes (11).

12. Control device for an electric clamp (4) that controls the method according to Claim 11, **characterized in that** the predetermined target wear value of the electrodes (11) is 8.5 mm.

## Patentansprüche

1. Verfahren zum Ersetzen von Elektroden (11) in einer elektrischen Zange (1) zum Schweißen des Blechs (2) eines Kraftfahrzeugs, umfassend die folgenden Schritte:
(i) Anbringen mindestens einer Elektrode (11) der elektrischen Zange (1) in dem jeweiligen Sitz (12),
(ii) Schweißen des Blechs (2) des Kraftfahrzeugs eine Anzahl von n Malen,
(iii) Fräsen der mindestens einen Elektrode (11), nachdem das Schweißen ausgeführt wurde,
(iv) Inkrementieren eines Zählers der Anzahl der Fräsvorgänge (51) in einer Schweißüberwachungsvorrichtung (3),
**dadurch gekennzeichnet, dass** es auch die folgenden Schritte beinhaltet:
(v) Verwenden der elektrischen Zange (1) zum Messen einer gefrästen Abmessung der Elektrode (61),
(vi) Vergleichen der gefrästen Abmessung der Elektrode (61) mit einer vorbestimmten Abmessung der Elektrode (62), und
(vii) Bestimmen der Abweichung einer Abmessung der gefrästen Elektrode (11) unter Verwendung einer variablen Steuerung (41) der elektrischen Zange (1), um die Position der Schweißarme in Bezug auf das Blech zu verändern, wobei dieser Wert auch verwendet wird, um den Zustand der Fräsmaschine oder des Messers zu überprüfen: wenn die Abweichung Null ist, bedeutet dies, dass sie nicht schneidet und es somit einen Defekt oder eine übermäßige Abnutzung des Messers oder der Fräsmaschine gibt,
wobei eine Steuervorrichtung konfiguriert ist, um die folgenden Schritte durchzuführen:
(viii) Ersetzen der mindestens einen Elektrode (11), wenn die gefräste Abmessung der Elektrode (61) größer ist als die vorbestimmte Abmessung der Elektrode (62), oder
(ix) Ersetzen der mindestens einen Elektrode (11), wenn der Zähler der Anzahl der Fräsvorgänge (51) größer ist als die vorbestimmte Anzahl der Fräsvorgänge (52).

2. Verfahren zum Ersetzen von Elektroden (11) in einer elektrischen Zange (1) zum Schweißen des Blechs (2) eines Kraftfahrzeugs nach Anspruch 1, **dadurch gekennzeichnet, dass** die Elektroden (11) ersetzt werden, wenn die vorbestimmte Anzahl von Fräsvorgängen (52) mindestens 150 ist.

3. Verfahren zum Ersetzen von Elektroden (11) in einer elektrischen Zange (1) zum Schweißen des Blechs (2) eines Kraftfahrzeugs nach Anspruch 1, **dadurch gekennzeichnet, dass**, wenn die gefräste Abmessung der Elektrode (61) kleiner ist als die vorbestimmte Abmessung der Elektrode (62) und/oder wenn der Zähler der Anzahl der Fräsvorgänge (51) kleiner ist als die vorbestimmte Anzahl der Fräsvorgänge (52), in Schritt (ii) ein neuer Schweißzyklus begonnen wird.

4. Verfahren zum Ersetzen von Elektroden (11) in einer elektrischen Zange (1) zum Schweißen des Blechs (2) eines Kraftfahrzeugs nach Anspruch 1, **dadurch gekennzeichnet, dass** die Messung des Fräsmaßes der Elektrode (61) in Schritt (v) durch die elektrische Zange (1) unter Verwendung einer variablen Steuerung (41) der elektrischen Zange (1) durchgeführt wird.

5. Verfahren zum Ersetzen von Elektroden (11) in einer elektrischen Zange (1) zum Schweißen des Blechs (2) eines Kraftfahrzeugs nach Anspruch 1, **dadurch gekennzeichnet, dass** der Schritt, bei dem die elektrische Zange (1) zum Messen einer gefrästen Abmessung der Elektrode (61) verwendet wird, auch Folgendes beinhaltet:
- Schließen der elektrischen Zange (1), bis sich die zwei Elektroden (11) berühren,
- Berechnen einer Bewegung mindestens eines beweglichen Arms (42), und
- Öffnen der elektrischen Zange (1) in die Ausgangsposition.

6. Verfahren zum Ersetzen von Elektroden (11) in einer elektrischen Zange (1) zum Schweißen des Blechs (2) eines Kraftfahrzeugs nach Anspruch 1, **dadurch gekennzeichnet, dass** der zusätzliche Schritt eines Bestimmens der Änderung der Abmessung der gefrästen Elektrode (11) ein Vergleichen der gefrästen Abmessung der Elektrode (61) mit einer gefrästen Abmessung der Elektrode umfasst, die zuvor in einem vorherigen Schweißzyklus gespeichert wurde.

7. Steuervorrichtung für eine elektrische Zange (1), die funktionsfähig mit der elektrischen Zange (1) verbunden ist, die Folgendes umfasst:
• mindestens einen beweglichen Arm (42), der durch einen Elektromotor (43) betätigt wird, um mindestens eine gefräste Elektrode (11) der elektrischen Zange (1) in dem zugehörigen Sitz (12) zu platzieren, wobei die mindestens eine Elektrode (11) durch eine Schneide einer Fräsmaschine (71) gefräst wird, nachdem die Schweißung durchgeführt wurde,
• einen Sensor (44), der Informationen über die Position des mindestens einen beweglichen Arms (42) der elektrischen Zange (1) sendet, wobei der mindestens eine bewegliche Arm (42) der elektrischen Zange (1) durch den Elektromotor (43) betätigt wird,
• eine variable Steuerung (41) der elektrischen Zange (1), die die Veränderung einer Abmessung der gefrästen Elektrode (11) bestimmt, um die Position der Schweißarme in Bezug auf das Blech zu verändern, und wobei dieser Wert auch verwendet wird, um den Zustand der Fräsmaschine oder des Messers zu überprüfen: wenn die Abweichung Null ist, bedeutet dies, dass sie nicht schneidet und es somit einen Defekt oder eine übermäßige Abnutzung des Messers oder der Fräsmaschine gibt,
• eine Anzeigeeinrichtung (45), die Informationen über mindestens einen Schritt des Verfahrens zum Ersetzen von Elektroden anzeigt,
• eine Schweißüberwachungsvorrichtung (3), die in der Lage ist, einen Zähler der Anzahl von Fräsvorgängen (51) zu inkrementieren und den Ersatz der mindestens einen Elektrode (11) zu bestimmen, wenn der Zähler der Anzahl von Fräsvorgängen (51) größer ist als die vorbestimmte Anzahl der Fräsvorgänge (52), wobei die Schweißüberwachungsvorrichtung (3) in der Lage ist, basierend auf der Messung einer gefrästen Abmessung einer Elektrode (61), die durch den Sensor (44) bestimmt wird, und Vergleichen der gefrästen Abmessung der Elektrode (61) mit einer vorbestimmten Abmessung der Elektrode (62), den Ersatz der mindestens einen Elektrode (11) zu bestimmen, wenn die gefräste Abmessung der Elektrode (61) größer ist als die vorbestimmte Abmessung der Elektrode (62),
**dadurch gekennzeichnet, dass** die Steuervorrichtung konfiguriert ist, um das Verfahren zum Ersetzen von Elektroden nach Anspruch 1 zu steuern.

8. Steuervorrichtung für eine elektrische Zange (4), die das Verfahren nach Anspruch 7 steuert, **dadurch gekennzeichnet, dass** die Anzeigeeinrichtung (45) anzeigt, ob der Ersatz der mindestens einen Elektrode (11) auf Folgendes zurückzuführen ist:
a) den Umstand, dass die gefräste Abmessung der Elektrode (61) größer ist als eine vorbestimmte Abmessung der Elektrode (62), oder
b) den Umstand, dass ein Zähler der Anzahl der Fräsvorgänge (51) größer ist als eine vorbestimmte Anzahl von Fräsvorgängen (52).

9. Steuervorrichtung für eine elektrische Zange (4), die das Verfahren nach Anspruch 7 steuert, **dadurch gekennzeichnet, dass** die Anzeigeeinrichtung (45) ein Signal ausgibt, wenn eine gefräste Abmessung der Elektrode (61), die von dem Sensor (44) des Elektromotors (43) mindestens eines beweglichen Arms (42) erfasst wird, größer ist als eine vorbestimmte Abmessung der Elektrode (62).

10. Steuervorrichtung für eine elektrische Zange (4), die das Verfahren nach Anspruch 9 steuert, **dadurch gekennzeichnet, dass** die vorbestimmte Abmessung der Elektrode (62) gleich wie ein vorbestimmter maximaler Verschleißwert der Elektrode (11) von 10 mm ist.

11. Steuervorrichtung für eine elektrische Zange (4), die das Verfahren nach Anspruch 7 steuert, **dadurch gekennzeichnet, dass** die Anzeigemittel (45) ein Signal ausgeben, wenn eine gefräste Abmessung der Elektrode (61), die von dem Sensor (44) des Elektromotors (43) mindestens eines beweglichen Arms (42) erfasst wird, größer als oder gleich wie ein Soll-Verschleißwert der Elektroden (11) ist.

12. Steuervorrichtung für eine elektrische Zange (4), die das Verfahren nach Anspruch 11 steuert, **dadurch gekennzeichnet, dass** der vorbestimmte Soll-Verschleißwert der Elektroden (11) 8,5 mm ist.

## Revendications

1. Procédé de remplacement d'électrodes (11) dans une fixation électrique (1) destinée au soudage de la tôle (2) d'un véhicule à moteur, comprenant les étapes suivantes :
(i) le placement d'au moins une électrode (11) de la fixation électrique (1) dans le siège associé (12),
(ii) le soudage de la tôle (2) du véhicule à moteur un nombre de fois n,
(iii) le fraisage de la au moins une électrode (11) une fois le soudage terminé,
(iv) l'augmentation d'un compteur du nombre d'opérations de fraisage (51) dans un dispositif de surveillance du soudage (3),
**caractérisé en ce qu'**il comprend en outre les étapes suivantes :
(v) l'utilisation de la fixation électrique (1) pour mesurer une dimension fraisée de l'électrode (61),
(vi) la comparaison de la dimension fraisée de l'électrode (61) avec une dimension prédéterminée de l'électrode (62), et
(vii) la détermination de la variation d'une dimension de l'électrode fraisée (11) à l'aide d'un contrôleur variable (41) de la fixation électrique (1) afin de modifier
la position des bras de soudage par rapport à la tôle, dans lequel cette valeur est également utilisée pour vérifier l'état de la fraiseuse ou de la lame ; si la variation est nulle, cela signifie qu'elle ne coupe pas et, ainsi, qu'il existe un défaut ou une usure excessive de la lame ou de la fraiseuse,
dans lequel un dispositif de commande est configuré pour exécuter les étapes suivantes :
(viii) le remplacement de la au moins une électrode (11) si la dimension fraisée de l'électrode (61) est supérieure à ladite dimension prédéterminée de l'électrode (62), ou
(ix) le remplacement de la au moins une électrode (11) si le compteur de nombre d'opérations de fraisage (51) est supérieur au nombre prédéterminé d'opérations de fraisage (52).

2. Procédé de remplacement d'électrodes (11) dans une fixation électrique (1) destinée à souder la tôle (2) d'un véhicule à moteur selon la revendication 1, **caractérisé en ce que** les électrodes (11) sont remplacées si le nombre prédéterminé d'opérations de fraisage (52) est d'au moins 150.

3. Procédé de remplacement d'électrodes (11) dans une fixation électrique (1) destinée à souder la tôle (2) d'un véhicule à moteur selon la revendication 1, **caractérisé en ce que**, si la dimension fraisée de l'électrode (61) est inférieure à ladite dimension prédéterminée de l'électrode (62), et/ou si le compteur du nombre d'opérations de fraisage (51) est inférieur au nombre prédéterminé d'opérations de fraisage (52), un nouveau cycle de soudures est lancé à l'étape (ii).

4. Procédé de remplacement d'électrodes (11) dans une fixation électrique (1) destinée à souder la tôle (2) d'un véhicule à moteur selon la revendication 1, **caractérisé en ce que** la mesure, par la fixation électrique (1), de la dimension fraisée de l'électrode (61) à l'étape (v) est effectuée à l'aide d'un contrôleur variable (41) de la fixation électrique (1).

5. Procédé de remplacement d'électrodes (11) dans une fixation électrique (1) destinée à souder la tôle (2) d'un véhicule à moteur selon la revendication 1, **caractérisé en ce que** l'étape à laquelle la fixation électrique (1) est utilisée pour mesurer une dimension fraisée de l'électrode (61) comprend en outre :
- la fermeture de la fixation électrique (1) jusqu'à ce que les deux électrodes (11) se touchent,
- le calcul d'un déplacement d'au moins un bras mobile (42), et
- l'ouverture de la fixation électrique (1) en position d'origine.

6. Procédé de remplacement d'électrodes (11) dans une fixation électrique (1) destinée à souder la tôle (2) d'un véhicule à moteur selon la revendication 1, **caractérisé en ce que** l'étape supplémentaire de détermination de la variation de la dimension de l'électrode fraisée (11) comprend la comparaison de la dimension fraisée de l'électrode (61) avec une dimension fraisée de l'électrode préalablement consignée lors d'un précédent cycle de soudage.

7. Dispositif de commande destiné à une fixation électrique (1), relié à la fixation électrique (1), qui comprend :
- au moins un bras mobile (42) actionné par un moteur électrique (43) afin de placer au moins une électrode fraisée (11) de la fixation électrique (1) dans le siège associé (12), dans lequel la au moins une électrode (11) est fraisée par une lame d'une fraiseuse (71) une fois le soudage terminé,
- un capteur (44) qui envoie des informations sur la position du au moins un bras mobile (42) de la fixation électrique (1), dans lequel le au moins un bras mobile (42) de ladite fixation électrique (1) est actionné par le moteur électrique (43),
- un contrôleur variable (41) de la fixation électrique (1), qui détermine la variation d'une dimension de l'électrode fraisée (11) afin de modifier la position des bras de soudage par rapport à la tôle, et dans lequel cette valeur est également utilisée pour vérifier l'état de la fraiseuse ou de la lame ; si la variation est nulle, cela signifie qu'elle ne coupe pas et, ainsi, qu'il existe un défaut ou une usure excessive de la lame ou de la fraiseuse,
- un moyen d'affichage (45) qui affiche des informations sur au moins une étape du procédé de remplacement d'électrodes,
- un dispositif de surveillance du soudage (3) capable d'augmenter un compteur du nombre d'opérations de fraisage (51) et de déterminer le remplacement de la au moins une électrode (11) si le compteur du nombre d'opérations de fraisage (51) est supérieur au nombre prédéterminé d'opérations de fraisage (52), dans lequel le dispositif de surveillance du soudage (3) est capable, sur la base de la mesure d'une dimension fraisée d'une électrode (61) déterminée par le capteur (44) et de la comparaison de la dimension fraisée de l'électrode (61) avec une dimension prédéterminée de l'électrode (62), de déterminer le remplacement de la au moins une électrode (11) si la dimension fraisée de l'électrode (61) est supérieure à ladite dimension prédéterminée de l'électrode (62),
**caractérisé en ce que** le dispositif de commande est configuré pour contrôler le procédé de remplacement des électrodes selon la revendication 1.

8. Dispositif de commande destiné à une fixation électrique (4) qui contrôle le procédé selon la revendication 7, **caractérisé en ce que** le moyen d'affichage (45) indique si le remplacement de la au moins une électrode (11) est dû :
a) au fait que la dimension fraisée de l'électrode (61) soit supérieure à une dimension prédéterminée de l'électrode (62), ou
b) au fait qu'un compteur du nombre d'opérations de fraisage (51) soit supérieur à un nombre prédéterminé d'opérations de fraisage (52).

9. Dispositif de commande destiné à une fixation électrique (4) qui contrôle le procédé selon la revendication 7, **caractérisé en ce que** le moyen d'affichage (45) émet un signal lorsqu'une dimension fraisée de l'électrode (61) détectée par le capteur (44) du moteur électrique (43) d'au moins un bras mobile (42) est supérieure à une dimension prédéterminée de l'électrode (62).

10. Dispositif de commande destiné à une fixation électrique (4) qui contrôle le procédé selon la revendication 9, **caractérisé en ce que** la dimension prédéterminée de l'électrode (62) est égale à une valeur d'usure maximale prédéterminée de l'électrode (11) de 10 mm.

11. Dispositif de commande destiné à une fixation électrique (4) qui contrôle le procédé selon la revendication 7, **caractérisé en ce que** le moyen d'affichage (45) émet un signal lorsqu'une dimension fraisée de l'électrode (61) détectée par le capteur (44) du moteur électrique (43) d'au moins un bras mobile (42) est supérieure ou égale à une valeur d'usure cible des électrodes (11).

12. Dispositif de commande destiné à une fixation électrique (4) qui contrôle le procédé selon la revendication 11, **caractérisé en ce que** la valeur d'usure cible prédéterminée des électrodes (11) est de 8,5 mm.
